# NEW EUROPEAN PATENT SPECIFICATION

(11) **EP 1 081 987 B2**
(45) Date of publication and mention of the opposition decision: **06.11.2013**
(45) Mention of the grant of the patent: 27.09.2006
(21) Application number: 00202946.0
(22) Date of filing: 21.08.2000
(51) Int. Cl.: H05B 3/84

(54) **Heatable glazing**
Heizbare Verglasung
Vitrage chauffant

(30) Priority: 29.08.1999 EP 99202756
(43) Date of publication of application: 07.03.2001
(73) Proprietor: AGC Flat Glass Europe SA, 1170 Bruxelles (BE)
(72) Inventor: Degand, Etienne, 6040 Jumet (BE); Maza, Christophe, 6040 Jumet (BE)
(74) Representative: Bayot, Daisy

(56) References cited:
- EP-A- 0 930 807
- US-A- 4 323 726
- US-A- 5 798 499

## Description

This invention relates to electrically heatable automotive glazing panels and particularly but not exclusively to a mass produced car windscreen having an electrically heatable coating layer.

Although the invention is described herein with particular reference to car windscreens it will be understood that it may be used with other automotive glazing panels, for example rear car window and car side windows.

US-A-4 323 726 discloses a glazing panel in accordance with the preamble of claim 1.

A de-misting and/or de-icing function may be conferred on an automotive glazing panel by providing it with an electrically heatable coating layer (for example a doped tin oxide coating layer or a coating layer containing one or more thin layers of silver) and relaying electrical power by means of a pair of spaced bus bars. The bus bars must be suitable to carry the levels of electrical current required for the heating application. This is typically greater than about 8 amps and generally in the order of between about 10 and 20 amps. Previous bus bar arrangements, for example electrically conductive silver containing enamel layers or tinned copper bus bars, have proved less than ideal.

According to a first aspect, the present invention provides an automotive glazing panel as defined in claim 1.

The invention may be seen as resulting from the realisation that a less conductive contact layer may be interposed between the highly conductive substrate of the bus bar and the electrically heatable coating layer to provide an advantageous arrangement. The majority of the electrical heating current may be relayed between the coating layer and an external electrical connector through the highly conductive substrate of the bus bar, such that the contact layer, in effect, provides electrical connection across its thickness between the coating layer and the highly conductive substrate but without contributing significantly to passage of electrical current along the length of the bus bar. In this way, despite the significantly higher electrical resistivity of the contact layer compared with the resistivity of the substrate of the bus bar, the contact layer may be arranged to confer one or more additional properties on the assembly without significantly increasing the overall resistance of the bus bar arrangement.

The highly conductive substrate may have an electrical resistivity that is less than 10 microohm centimetre, particularly between 1 microohm centimetre and 2 microohm centimetre. The contact layer may have an electrical resistivity that is greater than 0.1 ohm centimetre, particularly between 1 ohm centimetre and 20 ohm centimetre.

The highly conductive substrate of the bus bar may be provided as a metal strip, for example a strip which is made entirely of or essentially of aluminium or, preferably, copper. This may facilitate assembly of the bus bar by allowing the substrate to simply be placed in position during assembly. It may also facilitate recycling of the glazing by making the substrate reasonably easy to remove from the glazing at the end of the glazing's life, for example, by breaking the glazing and separating the substrate from the glazing material or by simply pulling the substrate with sufficient force to remove it from the glazing.

Arranging the contact layer to have only a small thickness may advantageously be used to avoid it adding significantly to the overall electrical resistance of the bus bar arrangement. This may be particularly advantageous if the contact layer has a high resistivity. The thickness of the contact layer may be less than 0.2mm, less than 0.1mm less than 0.05mm, less than 0.04mm, less than 0.03mm or less than 0.02mm. Its thickness is preferably between about 0.01mm and 0.04mm

The contact layer may be arranged to substantially mask the presence of the bus bar. This may render the arrangement aesthetically acceptable and may allow the use of bus bar arrangements and/or bus bar materials which would otherwise be unacceptable. This may be particularly relevant in automotive use where the style and visual appearance of the vehicle are critical factors. In such an arrangement, the contact layer may be substantially opaque and may be substantially black in visual appearance.

Alternatively, the contact layer may be arranged to be substantially transparent or translucent such that its presence is not substantially visible through the contact layer. In this case, the visible surface of the substrate may be substantially black in appearance; this may facilitate blending it visually into the surroundings. In this case the substrate may be made essentially of aluminium, or some other metal or alloy, having a surface which is substantially black in appearance.

The arrangement defined in claim 6 may advantageously be used to avoid the necessity of a second masking band to hide the bus bar from view from the other side of the glazing. The arrangement may be such that when viewed against the backdrop of the masking band the contact surface blends into the background so that the bus bar is substantially masked or hidden from view. The masking band may be a band of black masking material, for example a black enamel material. In this case, the contact layer may be substantially black in appearance.

Arranging for the contact layer to act as an adhesive may facilitate placing and/or assembly of the bus bar at the glazing. The bus bar may be provided in the form of a metal strip, for example a metal roll, to which the contact layer is attached. When the contact layer is adhesive, it may be protected by a release layer which is adapted to be removed prior to positioning the bus bar at the glazing.

The contact layer may comprise an electrically conducting adhesive. It may comprise an adhesive layer containing grains of one or more of the following: silver, nickel, silvered nickel, copper, graphite, carbon black. It may have an adhesive strength of between about 3 and 10 N/cm, preferably between about 5 and 7 N/cm.

The electrical resistance measured through the thickness of the contact layer may be less than 0.05 ohms, less than 0.03, or less than 0.01 ohms and may be between about 0.001 and 0.01 ohms.

The arrangement defined in claim 11 may provide a particularly advantageous masking arrangement as will be understood from the described embodiment.

According to a further aspect, the present invention provides for use of an arrangement as defined in claim 12.

An embodiment of the invention will now be described, by way of example only, with reference to:
Fig 1 which is a plan view of a windscreen and
Fig 2 which is an expanded cross sectional view of part of the periphery of a car windscreen (in which for ease of representation the constituent parts are not shown to scale).

Laminated windscreen 10 comprises an external sheet of glass 11 laminated to an internal sheet of glass 12 by means of a layer of pvb 13. A sputter deposited electrically heatable coating layer 14 having the general stacking arrangement: antireflective layer/optional barrier layer/infra red reflecting layer/optional barrier layer/ antireflective layer/optional barrier layer/infra red reflecting layer/ optional barrier layer/ antireflective layer (in which each of the infra red reflecting layers consists essentially of silver) is arranged at the inner surface 3 of the internal sheet of glass 12.

Electrical current is relayed to the electrically heatable coating layer 14 by means of spaced bus bars 16,26, with bus bar 26 having a portion 27 which runs along part of an uncoated peripheral band of the glazing so that electrical connectors 28,29 for the bus bars can be arranged together to facilitate connection.

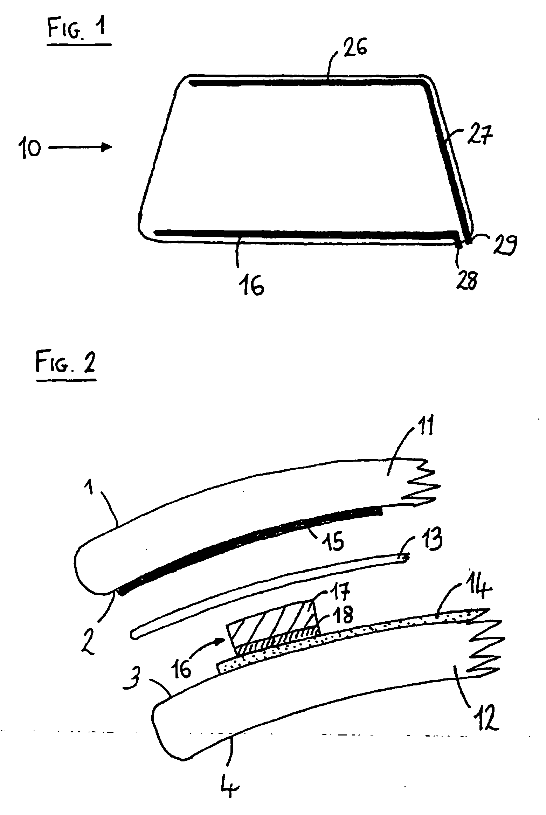

A band of opaque black enamel 15 (not shown in Fig 1) is arranged around the entire periphery of the glazing 10 at the inner surface 2 of the exterior sheet of glass 11.

Bus bar 16 comprising a copper substrate 17 about 0.1mm thick is arranged in electrical contact with the coating layer 14 by means of a contact layer 18 in the form of a conductive black coloured adhesive 18 about 0.025mm thick.

The black enamel 15 masks the bus bar 16 from view from the exterior face 1 of the glazing. When viewed from the interior face 4 of the glazing the bus bar 16 is substantially masked by means of the appearance of the contact layer 18 visually blending into the background of the black enamel 15 against which it is seen. This may avoid the need to arrange a further band of black enamel at face 3 or at face 4 of the windscreen to mask the bus bar 16 from the interior of the vehicle.

The bus bar arrangement of the present invention may also be used with laminated automotive glazings having an electrically heatable coating in position 2 and with monolithic automotive glazings.

The highly conductive substrate may be provided with an adhesive layer on each of its major faces. This may, for example, allow it to be assembled by adhering it to the laminating layer (e.g. of pvb) for subsequent assembly with the glazing.

The glazing may be provided with more than two bus bars, for example to divide to glazing into two or more heating zones and/or to separate a single bus bar into two or more portions.

## Claims

1. An automotive glazing panel having a substantially transparent electrically heatable coating layer and a pair of spaced bus bars which are adapted to relay electrical current to the coating layer, **characterised in that** at least one of the bus bars (16, 26) comprises a highly conductive substrate (17) arranged in electrical connection with the coating layer by means of a significantly less conductive contact layer (18) positioned between the highly conductive substrate and the electrically heatable coating layer (14), the significantly less conductive contact layer being a conductive black coloured adhesive and **in that** an opaque black enamel masking band (15) is arranged at a surface of the glazing panel behind the bus bar such that the masking band masks the bus bar from view from one side of the glazing panel, the contact layer visually blending into the background of the black enamel masking band against which it is seen from the other side of the glazing panel.

2. An automotive glazing panel in accordance with claim 1, in which the highly conductive substrate comprises a metal strip.

3. An automotive glazing panel in accordance with claim 1 or claim 2, in which the significantly less conductive contact layer has a thickness of between 0.01 and 0.04 mm.

4. An automotive glazing panel in accordance with any preceding claim, in which the significantly less conductive contact layer functions as an adhesive to at least partially adhere the highly conductive substrate to the electrically heatable coating layer.

5. An automotive glazing panel in accordance with any preceding claim, in which the significantly less conductive masking layer comprises an adhesive layer containing grains of one or more of the following: silver, nickel, silvered nickel, copper, graphite, carbon black.

6. An automotive glazing panel in accordance with any preceding claim, in which the significantly less conductive contact layer has an electrical resistivity of greater than 1 ohm centimetre at 20 °C.

7. An automotive glazing panel in accordance with any preceding claim, in which the highly conductive substrate has an electrical resistivity of less than 10 microohm centimetre at 20 °C.

8. An automotive glazing panel in accordance with any preceding claim, in which the glazing panel is a laminated vehicle windscreen (10) having a substantially transparent electrically heatable coating layer (14) arranged at the internal face of the interior sheet (12) of glazing material.

9. Use of an arrangement to substantially hide the presence of a bus bar associated with an automotive glazing panel **characterised in that** the arrangement comprises a vehicle glazing panel having a substantially transparent electrically heatable coating layer arranged at one of its surfaces, a bus bar comprising a highly conductive substrate arranged in electrical connection with said coating layer by means of a significantly less conductive contact layer positioned between the highly conductive substrate and the coating layer, the significantly less conductive contact layer being a conductive black coloured adhesive, and **in that** an opaque black enamel masking band (15) is arranged at a surface of the glazing panel behind the bus bar such that the masking band masks the bus bar from view from one side of the glazing panel, the contact layer visually blending into the background of the black enamel masking band against which it is seen from the other side of the glazing panel.

## Patentansprüche

1. Automobilverglasungsscheibe mit einer im wesentlichen transparenten elektrisch heizbaren Beschichtungsschicht und einem Paar von beabstandeten Strom- bzw. Sammelschienen, die angepaßt sind, elektrischen Strom an die Beschichtungsschicht weiterzugeben, **dadurch gekennzeichnet, dass** mindestens eine der Strom- bzw. Sammelschienen (16, 26) ein hochleitfähiges Substrat (17) umfaßt, welches in elektrischer Verbindung mit der Beschichtungsschicht mittels einer signifikant weniger leitfähigen Kontaktschicht (18) angeordnet ist, die zwischen dem hochleitfähigen Substrat und der elektrisch heizbaren Beschichtungsschicht (14) angeordnet ist, wobei die signifikant weniger leitfähige Kontaktschicht ein leitfähiges schwarzgefärbtes Haftmittel ist, und dass ein Maskierungsband (15) aus opaker schwarzer Emaille an einer Oberfläche der Verglasung hinter der Strom- bzw. Sammelschiene derart angeordnet ist, dass das Maskierungsband die Strom- bzw. Sammelschiene vor Sicht von einer Seite der Verglasung maskiert, wobei sich die Kontaktschicht visuell in den Hintergrund des Maskierungsbands aus schwarzer Emaille einfügt, gegen den von der anderen Seite der Verglasung gesehen wird.

2. Automobilverglasungsscheibe nach Anspruch 1, wobei das hochleitfähige Substrat einen Metallstreifen umfaßt.

3. Automobilverglasungsscheibe nach Anspruch 1 oder Anspruch 2, wobei die signifikant weniger leitfähige Kontaktschicht eine Dicke von zwischen 0,01 und 0,04 mm aufweist.

4. Automobilverglasungsscheibe nach einem vorhergehenden Anspruch, wobei die signifikant weniger leitfähige Kontaktschicht als ein Haftmittel wirkt, um das hochleitfähige Substrat zumindest teilweise an die elektrisch heizbare Beschichtungsschicht zu binden.

5. Automobilverglasungsscheibe nach einem vorhergehenden Anspruch, wobei die signifikant weniger leitfähige Maskierungsschicht eine Haftmittelschicht umfaßt, die Körner von einem oder mehreren der folgenden enthält: Silber, Nickel, versilbertes Nickel, Kupfer, Graphit, Ruß.

6. Automobilverglasungsscheibe nach einem vorhergehenden Anspruch, wobei die signifikant weniger leitfähige Kontaktschicht einen elektrischen Widerstand von größer als 1 Ohm Zentimeter bei 20°C aufweist.

7. Automobilverglasungsscheibe nach einem vorhergehenden Anspruch, wobei das hochleitfähige Substrat einen elektrischen Widerstand von weniger als 10 Mikroohm Zentimeter bei 20°C aufweist.

8. Automobilverglasungsscheibe nach einem vorhergehenden Anspruch, wobei die Verglasungsscheibe eine laminierte Fahrzeugwindschutzscheibe (10) mit einer im wesentlichen transparenten elektrisch heizbaren Beschichtungsschicht (14) ist, die an der Innenseite der Innenschicht (12) des Verglasungsmaterials angeordnet ist.

9. Verwendung einer Anordnung, um die Anwesenheit einer Strom- bzw. Sammelschiene, die mit einer Automobilverglasungsscheibe verbunden ist, im wesentlichen zu verbergen, **dadurch gekennzeichnet, dass** die Anordnung umfaßt:
eine Trägerverglasungsscheibe mit einer im wesentlichen transparenten elektrisch heizbaren Beschichtungsschicht, die an einer von deren Oberflächen angeordnet ist, eine Strom- bzw. Sammelschiene, umfassend ein hochleitfähiges Substrat, welches in elektrischer Verbindung mit der Beschichtungsschicht mittels einer signifikant weniger leitfähigen Kontaktschicht angeordnet ist, die zwischen dem hochleitfähigen Substrat und der Beschichtungsschicht angeordnet ist, wobei die signifikant weniger leitfähige Kontaktschicht ein leitfähiges schwarzgefärbtes Haftmittel ist, und dass ein Maskierungsband (15) aus opaker schwarzer Emaille an einer Oberfläche der Verglasung hinter der Strom- bzw. Sammelschiene derart angeordnet ist, dass das Maskierungsband die Strom- bzw. Sammelschiene vor Sicht von einer Seite der Verglasung maskiert, wobei sich die Kontaktschicht visuell in den Hintergrund des Maskierungsbands aus schwarzer Emaille einfügt, gegen den von der anderen Seite der Verglasung gesehen wird.

## Revendications

1. Vitrage de véhicule ayant une couche de revêtement chauffante substantiellement transparente et une paire de barres omnibus espacées qui sont adaptées pour relayer le courant électrique vers la couche de revêtement **caractérisé en ce que** au moins une des barres omnibus (16,26) comprend un substrat hautement conducteur (17)disposé de manière à offrir une connexion électrique avec le revêtement au moyen d'une couche de contact significativement moins conductrice (18) placée entre le substrat hautement conducteur et la couche de revêtement électriquement chauffante (14), la couche de contact significativement moins conductrice étant un adhésif conducteur de couleur noire, et **en ce qu'**une bande de masquage opaque en émail noir (15) est disposée sur une surface du vitrage derrière la barre omnibus de sorte que la bande de masquage masque la barre omnibus à la vue d'un côté du vitrage, la couche de contact se fondant visuellement dans l'arrière-plan de la bande de masquage en émail noir sur laquelle elle est vue depuis l'autre côté du vitrage.

2. Un vitrage de véhicule conformément à la revendication 1, dans lequel le substrat hautement conducteur comprend une bande métallique.

3. Un vitrage de véhicule conformément à la revendication 1 ou à la revendication 2, dans lequel la couche de contact significativement moins conductrice a une épaisseur d'entre 0,01 et 0,04 mm.

4. Un vitrage de véhicule conformément à l'une quelconque des revendications précédentes, dans lequel la couche de contact significativement moins conductrice est substantiellement opaque et masque substantiellement la présence de la barre omnibus.

5. Un vitrage de véhicule conformément à l'une quelconque des revendications de 1 à 3, dans lequel la couche de contact significativement moins conductrice est substantiellement transparente ou translucide et la surface de la barre omnibus visible à travers la couche de contact est d'apparence substantiellement noire.

6. Un vitrage de véhicule conformément à la revendication 4 ou la revendication 5, dans lequel une bande de masquage substantiellement opaque (15) est disposée sur une surface du vitrage derrière la barre omnibus de sorte que la bande de masquage masque la barre omnibus à la vue d'un côté du vitrage et offre un fond contre lequel la couche de contact est visible de l'autre côté du vitrage.

7. Un vitrage de véhicule conformément à l'une quelconque des revendications précédentes, dans lequel la couche de contact significativement moins conductrice fait fonction d'adhésif afin d'au moins coller partiellement le substrat hautement conducteur à la couche de revêtement électriquement chauffante.

8. Un vitrage de véhicule conformément à l'une quelconque des revendications précédentes, dans lequel la couche de masquage significativement moins conductrice comprend une couche adhésive contenant des grains de un ou plusieurs des matériaux suivants : argent, nickel, nickel argenté, cuivre, graphite, noir de carbone.

9. Utilisation d'une disposition destinée à cacher substantiellement la présence d'une barre omnibus associée à un vitrage automobile **caractérisé en ce que** la disposition comprend un vitrage de véhicule ayant une couche de revêtement électriquement chauffante substantiellement transparente disposée sur une de ses surfaces, une barre omnibus comprenant un substrat hautement conducteur placé en connexion électrique avec ladite couche de revêtement au moyen d'une couche de contact entre le substrat hautement conducteur et la couche de revêtement, la couche de contact significativement moins conductrice étant un adhésif conducteur de couleur noire, et **en ce qu'**une bande de masquage opaque en émail noir (15) est disposée sur une surface du vitrage derrière la barre omnibus de sorte que la bande de masquage masque la barre omnibus à la vue d'un côté du vitrage, la couche de contact se fondant visuellement dans l'arrière-plan de la bande de masquage en émail noir sur laquelle elle est vue depuis l'autre côté du vitrage.
